# EUROPEAN PATENT SPECIFICATION

(11) **EP 3 450 130 B1**
(45) Date of publication and mention of the grant of the patent: **10.11.2021**
(21) Application number: 17189075.9
(22) Date of filing: 01.09.2017
(51) Int. Cl.: B29C 45/16, D06F 58/30, D06F 58/04, D06F 58/20, D06F 58/38, D06F 103/10

(54) **HOUSEHOLD APPLIANCE WITH A COMPONENT PART CONTAINING A BASIC POLYMER BODY AND A METAL COMPOSITION AND PROCESS FOR ITS MANUFACTURE**
HAUSHALTSGERÄT MIT EINER KOMPONENTE MIT EINEM BASISCHEN POLYMERKÖRPER UND EINER METALLZUSAMMENSETZUNG SOWIE VERFAHREN ZU DESSEN HERSTELLUNG
APPAREIL MÉNAGER AYANT UN COMPOSANT CONTENANT UN CORPS POLYMÈRE DE BASE ET UNE COMPOSITION MÉTALLIQUE ET SON PROCÉDÉ DE FABRICATION

(43) Date of publication of application: 06.03.2019
(73) Proprietor: BSH Hausgeräte GmbH, 81739 München (DE)
(72) Inventor: Galka, Damian, 93-120 Lodz (PL); Grabowicz, Jaroslaw, 92-203 Lodz (PL); Kohlrusch, Frank, 13187 Berlin (DE); Lis, Grzegorz, 91-336 Lodz (PL); Tobianski, Wojciech, 93-030 Lodz (PL)

(56) References cited:
- CN-A- 105 040 379
- DE-B3-102015 212 692
- DE-U1-202016 001 817
- US-A1- 2016 208 428

## Description

The invention relates to a household appliance with a component part that contains a basic polymer body containing an organic polymer and a metal composition forming a strip conductor therein, and a process for the manufacture of the household appliance.

Household appliances contain many component parts through which electric cables are guided in order to allow the electrical connection between for example electrodes, an electric motor, an air blower, displays, control units etc. and the electric power supply of the household appliance. Usually, electric cables consist of an inner metal wire and an outer insulating polymer sheath, a so-called wire harness.

It was thus attempted in specific technical areas to avoid the polymer sheath by forming an electrical strip conductor on a plastic component by preparing in a first step a polymer body by injection molding and by forming in a subsequent step a strip conductor on the polymer body. To this end, the strip conductor might be punched out of a metal sheet and placed on the polymer body. It is moreover known to extrusion coat the strip conductor punched out of metal sheet with the plastic material forming the polymer body.

However, the manufacture of such component parts is cumbersome, time-consuming and thus comparatively expensive. It was thus attempted to provide other methods to obtain a hybrid material made of plastic and metal.

The publication DE 10 2014 010 628 A1 discloses a plastic component comprising: at least one electrical contact element; a polymer body; and at least one electrical strip conductor, by means of which the electrical contact element can be electrically connected, wherein the plastic component is manufactured according to a combined injection molding and metal casting or metal injection molding method, in which the polymer body is manufactured by injection molding and the at least one electrical strip conductor is manufactured by metal casting or metal injection molding. The injection molding is followed by the metal casting or metal injection molding or the metal casting or metal injection molding followed by the injection molding occur one after another, wherein the polymer body or the at least one electrical strip conductor formed last is molded into the polymer body or the at least one electrical strip conductor formed first.

The publication DE 10 2011 101 956 A1 describes a method for two-component injection molding, in which a plastic component is prepared by means of an injection molding and a metal component is injected on the plastic component. A special nozzle is used for injecting metal, which includes a heated nozzle tube.

The publication DE 10 2015 004 896 A1 discloses a process for the manufacture of a circuit board as carrier for electric, electronic or electromechanical component part, with a carrier body made of plastic and at least an electrical strip conductor made of a metallic material. The circuit board is manufactured by a combined injection molding and metal casting process wherein the carrier body made of plastic is manufactured by means of an injection molding process and the at least one electric strip conductor is manufactured subsequently by means of a metal casting or metal injection process, whereby the latter formed component is injected on the afore formed component.

The publication US 2011/0045577 A1 discloses a method of fabricating an electrically conductive pathway comprising acts of: providing a structure defining a microfluidic system, the microfluidic system comprising a substantially enclosed microfluidic channel; causing a liquid metal to flow into at least a portion of the substantially enclosed microfluidic channel to form the electrically conductive pathway, the metal having a temperature greater than a melting point of the metal; and passing an electrical current through the electrically conductive pathway; and modifying the shape of the electrically conductive pathway after the passing step.

The publication document EP 2387642 A1 discloses a dryer with a plastic shield plate. The shield plate holds two electrodes for a humidity sensor. The electrodes are mounted to the shield plate with screws and connected to the control unit via a wire harness.

The publication document DE 10 2015 212 692 B3 discloses a hybrid component part ("Verbundbauteil") which is in particular used in illumination equipment. Household appliances are not mentioned. The hybrid component part has a component part that contains a basic polymer body containing an organic polymer and a metal composition, wherein the basic polymer body is in direct contact with the metal composition and wherein the organic polymer is above the melting point.

The publication document US 2016/0208428 A1 discloses an energy saver cycle and a drying procedure in a dryer. In the dryer, textiles being in a drum of the dryer randomly contact static humidity sensor spaced electrodes, so that the textiles are intermittently in contact with the sensor electrodes. The humidity sensor is described as usually comprising a pair of spaced bars or electrodes and also circuits for providing a voltage signal representation of the humidity content of the items to an electronic controller.

The publication document DE 20 2016 001 817 U1 discloses a specific injection molding machine for the manufacture of hybrid component parts, in particular thixotropic metal - plastic hybrids. In the discussion of the state of the art, various combination technologies for the manufacture of metal - plastic hybrid materials are described, for example the IMKS process wherein a low melting metal alloy is injected onto a heat resistant thermoplastic carrier.

In view of this situation it is an object of the present invention to provide a household appliance with a component part that contains a basic polymer body containing an organic polymer with at least one strip conductor which component part can be manufactured in a simple and fast manner. Another object of this invention is to provide a process for manufacturing the household appliance.

This object is achieved according to the invention with a household appliance and a process for the manufacture of the household appliance having the features of the corresponding independent claims. Preferred embodiments of the household appliance are disclosed in the corresponding dependent claims. Preferred embodiments of the household appliance correspond to preferred embodiments of the process for the manufacture of the household appliance, and vice versa, even if not explicitly stated herein.

The invention is thus directed to a household appliance with a component part that contains a basic polymer body containing an organic polymer and a metal composition forming a strip conductor therein, wherein the basic polymer body is in direct contact with the metal composition and wherein the softening point of the organic polymer is above the melting point of the metal composition, wherein the component part is obtainable by injection molding wherein the organic polymer is first of all injection molded to provide a basic polymer body with cavities and/or channels into which thereafter the metal composition is introduced in liquid form, and wherein the melting temperature of the metal composition is in the range of from 100 to 130°C.

The softening point can be determined for example as Vicat softening temperature which is in general used for the determination of the softening point for materials that have no defined melting point, such as plastics. It is taken as the temperature at which a specimen consisting of the organic polymer is penetrated to a depth of 1 mmm by a flat-ended needle with a 1 mm² circular or square cross-section. For the Vicat A test, a load of 10 N is used and for the Vicat B test a load of 50 N (see also ISO 306). Herein the Vicat A test is preferred.

The term "in direct contact" as used herein refers to a situation wherein the strip conductor does not contain a polymeric sheath around a metal wire. "Direct contact" does however not exclude the situation wherein a chemical agent incl. another metal is used in order to improve the adhesion of the metal composition to the basic polymer body.

The metal composition may comprise one or more of tin, indium, silver, lead, bismuth, zinc, cadmium and antimony. Preferably a metal composition containing tin is used. Non-limiting examples of suitable metal compositions include various alloys of tin and lead, for example, 50 % Sn/50 % Pb; or 60% Pb and 40 % Sn. Other metal compositions may include other metals in addition to tin and/or lead. Specific non-limiting examples of the metal composition include 48 % Sn, 52 % In (melting point of about 118°C); 42% Sn/58 % Bi (melting point of about 118°C).

A household appliance is preferred wherein the component part is obtainable by injection molding the organic polymer to provide the basic polymer body with cavities and/or channels, wherein the introduction of the metal composition in liquid form has been effected by infusing or injecting the metal composition into a channel in the basic polymer body.

In a preferred embodiment of the household appliance, the strip conductor has a maximum cross section of 7 mm², preferably of 5 mm², even more preferably of 3,5 mm² and most preferably a maximum cross section of 2 mm².

In another preferred embodiment, the strip conductor is in electric connection with an electrical contact element which allows electric contact with an electric power supply of the household appliance. The electrical contact element can be provided as part of the component part.

The term "household appliance" as used herein, refers to devices which are intended to be used in private household applications, also including communication and data processing devices, which are suitable und intended to interact with the devices for private household applications. In particular, the following household applications are included: stoves, ovens, baking ovens, microwaves, hobs, cooker hoods, dishwashers, laundry machines, dryers, refrigerators, freezers, vacuum cleaners, coffee machines, water boilers, plant oil cookers, irons, hair dryers, shavers, kitchen machines and kitchen devices, steam cookers, electrical small instantaneous water heaters, devices for heating and storing water for the kitchen and the bathroom as well as robotic applications insofar as they are intended for private household applications.

Accordingly, the term "component part" is to be understood broadly. Depending on the household appliance concerned, the component part may differ considerably in shape and composition.

The household appliance is preferably a water-bearing household appliance. In general, a water-bearing household appliance is a household appliance during the operation of which water is used. The items to be treated therein can be, in particular, tableware or laundry items. Treating should be understood to encompass cleaning, drying and freshening.

In a preferred embodiment, the water-bearing household appliance is a dishwasher or a laundry treatment device. In a particular preferred embodiment, the household appliance is a laundry treatment device belonging to the group consisting of a washing machine, a washer-dryer and a dryer.

Most preferably, the household appliance is a dryer or a washer dryer.

In a preferred embodiment of the dryer or washer dryer, the component part that contains a basic polymer body containing an organic polymer and a metal composition forming a strip conductor is a humidity measurement system containing two electrodes that are connected via the strip conductors to a an electric power supply such that the conductivity of humid clothes between these electrodes can be measured.

In another preferred embodiment of the dryer or washer dryer, the component part that contains a basic polymer body containing an organic polymer and a metal composition forming a strip conductor is the door complex, i.e. the complex which is used for closing the treatment chamber for the treatment of clothes.

The basic polymer contains an organic polymer. Preferably, the weight percentage of the organic polymer in the basic polymer body is from 95 to 100 % in that the basic polymer body may also contain ingredients that provide the polymer body with resistance to light, flammability, color etc.

The basic polymer body can contain one or more polymers. In a preferred embodiment of the household appliance of the present invention, the component part comprises a thermoplastic, an elastomer, a thermoplastic elastomer, a duroplast, or a mixture thereof.

The term "thermoplastic", as used herein, refers to a polymer that becomes pliable or moldable above a specific temperature and solidifies upon cooling. Examples for thermoplastic polymers include but are not limited to polyacrylates, acrylonitrile-butadiene-styrenes, polyamides such as nylon, polyacetic acid, polybenzimidazole, polycarbonate, polyether sulfone, polyetherether ketone, polyetherimide, polyethylene, polyphenylene oxide, polyphenylene sulfide, polypropylene, polystyrene, polyvinylchloriode, polyethyleneterephthalate, polyurethane, polyester and polytetrafluoroethylene (e.g. Teflon).

The term "elastomer", as used herein, refers to a polymer with viscoelasticity (having both viscosity and elasticity). Examples for elastomers include but are not limited to unsaturated rubbers such as natural polyisoprene (natural rubber), synthetic polyisoprene, polybutadiene, chloroprene rubber, butyl rubber, styrene-butadiene rubber, (hydrogenated) nitrile rubber, saturated rubbers such as ethylene propylene rubber, ethylene propylene diene rubber, epichlorohydrin rubber, polyacrylic rubber, silicone, silicone rubber, fluorosilicone rubber, fluoro- and perfluoroelastomers, and ethylene-vinyl acetate.

The term "thermoplastic elastomer", as used herein, refers to a class of copolymers or a physical mix of polymers which consists of materials with both thermoplastic and elastomeric properties. Examples for thermoplastic elastomers include but are not limited to styrenic block copolymers, polyolefin blends, elastomeric alloys, thermoplastic polyurethanes, thermoplastic copolyesters, and thermoplastic polyamides.

The term "duroplast", as used herein, refers to a polymer which is no longer pliable after curing. Examples for duroplasts include but are not limited to aminoplasts, phenoplasts, epoxy resins, polyacrylates, polyurethanes, polyesters, urea formaldehyde resins, melamine formaldehyde resins, and phenol formaldehyde resins.

In a more preferred embodiment of the present invention, the component part of the household appliance comprises a polymer selected from the group consisting of polypropylene, polyethylene, polyethyleneterephthalate, other polyesters, polyamides, polyurethanes, polyacrylates, polycarbonate, polystyrene, polyimides, polymethacrylates, polyoxoalkylenes, poly(phenylene oxides), polyvinylesters, polyvinylethers, polyvinylidene chloride, acrylonitrile-butadiene-styrene, natural and synthetic polyisoprene, polybutadiene, chloroprene rubber, styrene-butadiene rubber, tetrafluoroethylene, silicone, acrylate resins, polyurethane resins, silicone resins, polyester resins, alkyd resins, epoxy resins, phenolic resins, and urea or amine based resins, or a mixture thereof.

More preferably, the organic polymer is selected from the group consisting of polypropylene, polyamide, polymethylmethacrylate, polycarbonate and a mixture of one or more of these.

The invention is moreover directed to a process for manufacturing a household appliance with a component part that contains a basic polymer body containing an organic polymer and a metal composition forming a strip conductor therein, wherein the basic polymer body is in direct contact with the metal composition and wherein the softening point of the organic polymer is above the melting point of the metal composition, and wherein the melting temperature of the metal composition is in the range of from 100 to 130°C, comprising the steps:
(a) manufacturing the basic polymer body by means of injection molding the organic polymer in a mold that provides for the formation of cavities and/or channels in the basic polymer body to be formed;
(b) introducing the metal composition in liquid form into the cavities and/or channels; and
(c) allowing the liquid metal composition to cool down and solidify.

In step (b), at least one strip conductor is manufactured by means of metal casting or metal injection molding such that the at least one electrical strip conductor is molded into the polymer body. The introduction of the liquid metal composition into the cavities and/or channels can thus be achieved by direct pouring or by means of injection.

Preferably, the metal composition is injected into the cavities and/or channels.

The channel has preferably a maximum cross section of 7 mm², in particular of 5 mm², even more preferably of 3,5 mm² and most preferably a maximum cross section of 2 mm².

In a preferred embodiment, at least a portion of the wall of the channel is treated to enable the wall to be more easily wet by the liquid metal composition. Such treatment can comprise, for example, chemically altering at least a portion of the wall. A variety of materials may be used for this purpose. For example, a portion of the wall may be coated for example, by metal deposition with a different metal able to improve wetting with a low temperature melting metal. In other embodiments, chemicals such as alkane thiols or silanes may be used to improve wetting, for example 3-mercaptopropyltrimethoxysilane. Moreover, certain portions of the channel may not be treated, so that the liquid metal composition preferentially wets and fills certain portions of the channels and not others.

In order to electrically contact the strip conductor to an electric power supply, the strip conductor is usually connected to preformed electrical contact elements in the form of plugs or sockets. These electrical contact elements can be placed in the mold before the injection of the metallic composition such that they can be embedded in the metallic composition. For example, the electrical contact elements can be placed in a mold before the organic polymer is injected to form the basic polymer body or they can be placed in the mold to be used for metal injection by attaching them in a suitable manner to the basic polymer body.

Preferably, an electrical contact element is thus mounted at the basic polymer body before or after the manufacturing of the basic polymer body in step (a). These electrical contact elements can be placed in the mold before the introduction, preferably injection, of the metallic composition such that they can be easily brought in contact with the metallic composition. It is however also possible to mount the contact elements thereafter which can be achieved for example in that a prefabricated electrical contact element is pressed onto the metal composition of the strip conductor.

In preferred embodiments of the process, electrical components, such as electrodes, for examples electrodes used in dryers for measuring the conductivity of wet clothes, capacitors, inductors, integrated circuit chips, etc. may be included within the component part. It is then preferred in the process of the invention to form an electrical connection between one or more such electrical components and at least a portion of the solidified liquid metal composition within the channels.

It is possible to sonicate the component part in order to facilitate flow of the metal composition in the channel.

In order to obtain a particularly good joinder between the basic polymer body and the metallic composition, the material properties as well as process parameters can be adjusted such that the two components form a good joinder by forming a chemical bond. As an alternative or in addition thereto the process conditions and materials might be selected such that the basic polymer body partially melts on its surface when the basic polymer body comes into contact with the molten metal composition.

The introduction of the metallic composition by injection in order to form strip conductors is preferably effected in the same injection molding apparatus in which the basic polymer body is formed. It is however also possible that the basic polymer body is transferred into a separate injection molding apparatus for the injection of the metal composition.

The present invention has several advantages. The invention allows it to produce household appliances wherein a component part containing a basic polymer body and a strip conductor can be produced very quickly, in a simple manner and at low cost.

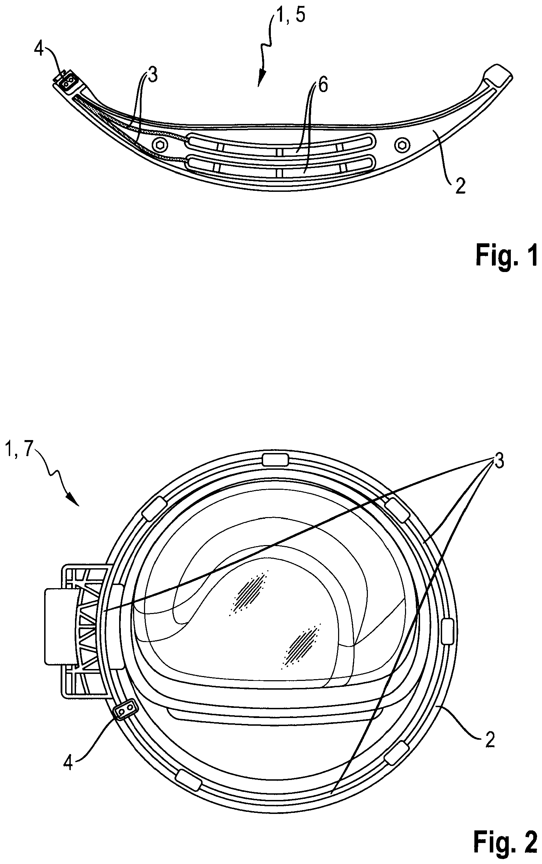

In the following the invention will be described in more detail by reference to Figures 1 and 2.
Fig. 1 shows as a first non-limiting example a component part in a dryer for a household appliance of the invention which contains a basic polymer body containing an organic polymer and a metal composition forming a strip conductor which is here a humidity measurement system.
Fig. 2 shows as a second non-limiting example a component part in a dryer for a household appliance of the invention which contains a basic polymer body containing an organic polymer and a metal composition forming a strip conductor which is here a door complex.

The component part 1 in a dryer as household appliance according to the invention shown in Fig. 1 is a humidity measurement system 5 containing two electrodes 6 that are connected via strip conductors 3 to an electric power supply not shown in Fig. 1 such that the conductivity of humid clothes between these electrodes can be measured. 2 refers to the basic polymer body. The strip conductors 6 are connected to an electrical contact element 4.

The component part 1 in a dryer as a household appliance according to the invention shown in Fig. 2 is a door complex 7, i.e. the complex which is used for closing the treatment chamber for the treatment of clothes. 2 refers to the basic polymer body. The strip conductors 6 are connected to an electrical contact element 4 which allows the connection to an electric power supply not shown in Fig. 2.

### REFERENCE SIGNS

- 1: Component part
- 2: Basic polymer body
- 3: Strip conductor
- 4: Electrical contact element (in between an electric power supply and the strip conductor)
- 5: Humidity measurement system
- 6: Electrodes
- 7: Door complex

## Claims

1. Household appliance with a component part (1) that contains a basic polymer body (2) containing an organic polymer and a metal composition forming a strip conductor (3) therein, wherein the basic polymer body (2) is in direct contact with the metal composition and wherein the softening point of the organic polymer is above the melting point of the metal composition, **characterized in that** the component part (1) is obtainable by injection molding wherein the organic polymer is first of all injection molded to provide a basic polymer body (2) with cavities and/or channels into which thereafter the metal composition is introduced in liquid form, and wherein the melting temperature of the metal composition is in the range of from 100 to 130°C.

2. Household appliance according to claim 1, wherein the strip conductor (3) has a maximum cross section of 7 mm².

3. Household appliance according to any of claims 1 to 2, wherein the strip conductor (3) is in electric connection with an electrical contact element (4) which allows electric contact with an electric power supply of the household appliance.

4. Household appliance according to any of claims 1 to 3, wherein the metal composition contains tin.

5. Household appliance according to any of claims 1 to 4, wherein the household appliance is a laundry treatment device belonging to the group consisting of a washing machine, a washer-dryer and a dryer.

6. Household appliance according to claim 5, wherein the component part (1) that contains a basic polymer body (2) containing an organic polymer and a metal composition forming a strip conductor (3) is a humidity measurement system (5) containing two electrodes (6) that are connected via the strip conductors (3) to an electric power supply such that the conductivity of humid clothes between these electrodes (5) can be measured.

7. Household appliance according to claim 5, wherein the component part (1) that contains a basic polymer body (2) containing an organic polymer and a metal composition forming a strip conductor (3) is the door complex (6).

8. Household appliance according to any of claims 1 to 7, wherein the organic polymer is selected from the group consisting of polypropylene, polyamide, polymethylmethacrylate, polycarbonate and a mixture of one or more of these.

9. Process for manufacturing a household appliance with a component part (1) that contains a basic polymer body (2) containing an organic polymer and a metal composition forming a strip conductor (3) therein, wherein the basic polymer body (2) is in direct contact with the metal composition and wherein the softening point of the organic polymer is above the melting point of the metal composition, and wherein the melting temperature of the metal composition is in the range of from 100 to 130°C, comprising the steps:
a) manufacturing the basic polymer body (2) by means of injection molding the organic polymer in a mold that provides for the formation of cavities and/or channels in the basic polymer body (2) to be formed;
b) introducing the metal composition in liquid form into the cavities and/or channels; and
c) allowing the liquid metal composition to cool down and solidify.

10. Process according to claim 9, wherein the metal composition is injected into the cavities and/or channels.

11. Process according to claim 9 or 10, wherein an electrical contact element is mounted at the basic polymer body (2) before or after the manufacturing of the basic polymer body (2) in step (a).

12. Process according to any of claims 9 to 11, wherein the introduction of the metallic composition in order to form strip conductors (3) is effected by injection in the same injection molding apparatus in which the basic polymer body (2) is formed.

## Patentansprüche

1. Haushaltsgerät mit einem Bestandteil (1), der einen Grundpolymerhauptteil (2) enthält, welcher ein organisches Polymer und eine Metallzusammensetzung enthält, die darin eine Leiterbahn (3) bildet, wobei sich der Grundpolymerhauptteil (2) in direktem Kontakt mit der Metallzusammensetzung befindet und die Erweichungstemperatur des organischen Polymers über dem Schmelzpunkt der Metallzusammensetzung liegt, **dadurch gekennzeichnet, dass** sich der Bestandteil (1) durch Spritzgießen herstellen lässt, wobei das organische Polymer zum Bereitstellen eines Grundpolymerhauptteils (2) mit Hohlräumen und/oder Kanälen, in die dann in flüssiger Form die Metallzusammensetzung eingebracht wird, zunächst spritzgegossen wird und die Schmelztemperatur der Metallzusammensetzung im Bereich von 100 bis 130°C liegt.

2. Haushaltsgerät nach Anspruch 1, wobei die Leiterbahn (3) einen maximalen Querschnitt von 7 mm² aufweist.

3. Haushaltsgerät nach einem der Ansprüche 1 bis 2, wobei die Leiterbahn (3) elektrisch mit einem elektrischen Kontaktelement (4) verbunden ist, das einen elektrischen Kontakt mit einer Stromversorgung des Haushaltsgeräts ermöglicht.

4. Haushaltsgerät nach einem der Ansprüche 1 bis 3, wobei die Metallzusammensetzung Zinn enthält.

5. Haushaltsgerät nach einem der Ansprüche 1 bis 4, wobei es sich bei dem Haushaltsgerät um eine Wäschebehandlungsvorrichtung handelt, die zu der Gruppe gehört, welche aus einer Waschmaschine, einem Waschtrockner und einem Trockner besteht.

6. Haushaltsgerät nach Anspruch 5, wobei es sich bei dem Bestandteil (1), der einen Grundpolymerhauptteil (2) enthält, welcher ein organisches Polymer und eine Metallzusammensetzung enthält, die eine Leiterbahn (3) bildet, um ein Feuchtemesssystem (5) handelt, das zwei Elektroden (6) enthält, die über die Leiterbahnen (3) an eine Stromversorgung angeschlossen sind, so dass die Leitfähigkeit von feuchter Kleidung zwischen diesen Elektroden (5) gemessen werden kann.

7. Haushaltsgerät nach Anspruch 5, wobei es sich bei dem Bestandteil (1), der einen Grundpolymerhauptteil (2) enthält, welcher ein organisches Polymer und eine Metallzusammensetzung enthält, die eine Leiterbahn (3) bildet, um die Türbaugruppe (6) handelt.

8. Haushaltsgerät nach einem der Ansprüche 1 bis 7, wobei das organische Polymer aus der Gruppe ausgewählt ist, die aus Polypropylen, Polyamid, Polymethylmethacrylat, Polycarbonat und einem Gemisch aus einer oder mehreren dieser Substanzen besteht.

9. Verfahren zum Herstellen eines Haushaltsgeräts mit einem Bestandteil (1), der einen Grundpolymerhauptteil (2) enthält, welcher ein organisches Polymer und eine Metallzusammensetzung enthält, die darin eine Leiterbahn (3) bildet, wobei sich der Grundpolymerhauptteil (2) in direktem Kontakt mit der Metallzusammensetzung befindet und die Erweichungstemperatur des organischen Polymers über dem Schmelzpunkt der Metallzusammensetzung liegt und die Schmelztemperatur der Metallzusammensetzung im Bereich von 100 bis 130°C liegt, mit folgenden Schritten:
a) Herstellen des Grundpolymerhauptteils (2) durch Spritzgießen des organischen Polymers in einem Formwerkzeug, das für das Bilden von Hohlräumen und/oder Kanälen in dem zu formenden Grundpolymerhauptteil (2) sorgt,
b) Einbringen der Metallzusammensetzung in flüssiger Form in die Hohlräume und/oder Kanäle und
c) Abkühlen- und Erstarrenlassen der flüssigen Metallzusammensetzung.

10. Verfahren nach Anspruch 9, wobei die Metallzusammensetzung in die Hohlräume und/oder Kanäle eingespritzt wird.

11. Prozess nach Anspruch 9 oder 10, wobei vor oder nach dem Herstellen des Grundpolymerhauptteils (2) in Schritt a) ein elektrisches Kontaktelement an dem Grundpolymerhauptteil (2) angebracht wird.

12. Verfahren nach einem der Ansprüche 9 bis 11, wobei das Einbringen der Metallzusammensetzung zwecks Bildens von Leiterbahnen (3) durch Einspritzen in die gleiche Spritzgießvorrichtung erfolgt, in der der Grundpolymerhauptteil (2) gebildet wird.

## Revendications

1. Appareil électroménager comprenant une partie formant composant (1) qui contient un corps polymère de base (2) contenant un polymère organique et une composition de métal y formant un conducteur plat (3), dans lequel le corps polymère de base (2) est en contact direct avec la composition de métal et dans lequel le point de ramollissement du polymère organique se situe au-dessus du point de fusion de la composition de métal, **caractérisé en ce que** la partie formant composant (1) peut s'obtenir par moulage par injection, dans lequel le polymère organique est tout d'abord moulé par injection pour fournir un corps polymère de base (2) comprenant des cavités et/ou des canaux dans lesquels ensuite la composition de métal est introduite sous forme liquide, et dans lequel la température de fusion de la composition de métal se situe dans l'intervalle compris entre 100 et 130°C.

2. Appareil électroménager selon la revendication 1, dans lequel le conducteur plat (3) présente une section transversale maximale de 7 mm².

3. Appareil électroménager selon l'une quelconque des revendications 1 à 2, dans lequel le conducteur plat (3) est en raccord électrique avec un élément de contact électrique (4) qui permet un contact électrique avec l'alimentation électrique de l'appareil électroménager.

4. Appareil électroménager selon l'une quelconque des revendications 1 à 3, dans lequel la composition de métal contient de l'étain.

5. Appareil électroménager selon l'une quelconque des revendications 1 à 4, dans lequel l'appareil électroménager est un appareil de traitement de linge appartenant au groupe constitué d'une machine à laver, d'un lave-linge/sèche-linge intégré et d'un séchoir.

6. Appareil électroménager selon la revendication 5, dans lequel la partie formant composant (1) qui contient un corps de polymère de base (2) contenant un polymère organique et une composition de métal formant un conducteur plat (3) est un système de mesure de l'humidité (5) contenant deux électrodes (6) connectées via les conducteurs plats (3) à une alimentation électrique de sorte que la conductivité des vêtements humides entre ces électrodes (5) peut être mesurée.

7. Appareil électroménager selon la revendication 5, dans lequel la partie formant composant (1) qui contient un corps de polymère de base (2) contenant un polymère organique et une composition de métal formant un conducteur plat (3) est le complexe formant la porte (6).

8. Appareil électroménager selon l'une quelconque des revendications 1 à 7, dans lequel le polymère organique est sélectionné parmi le groupe constitué des polypropylène, polyamide, polyméthylméthacrylate, polycarbonate et un mélange d'un ou de plusieurs de ceux-ci.

9. Procédé de fabrication d'un appareil électroménager comprenant une partie formant composant (1) qui contient un corps de polymère de base (2) contenant un polymère organique et une composition de métal y formant un conducteur plat (3), dans lequel le corps de polymère de base (2) est en contact direct avec la composition de métal et dans lequel le point de ramollissement du polymère organique se situe au-dessus du point de fusion de la composition de métal, et dans lequel la température de fusion de la composition de métal se situe dans l'intervalle compris entre 100 et 130°C, comprenant les étapes suivantes :
a) fabriquer le corps de polymère de base (2) par moulage par injection du polymère organique dans un moule qui permet la formation de cavités et/ou de canaux dans le corps de polymère de base (2) à former ;
b) introduire la composition de métal sous forme liquide dans les cavités et/ou les canaux ; et
c) laisser la composition de métal liquide refroidir et se solidifier.

10. Procédé selon la revendication 9, dans lequel la composition de métal est injectée dans les cavités et/ou les canaux.

11. Procédé selon la revendication 9 ou 10, dans lequel un élément de contact électrique est monté sur le corps de polymère de base (2) avant ou après la fabrication du corps de polymère de base (2) à l'étape (a).

12. Procédé selon l'une quelconque des revendications 9 à 11, dans lequel l'introduction de la composition métallique pour former les conducteurs plats (3) s'effectue par injection dans le même appareil de moulage par injection que celui dans lequel le corps de polymère de base (2) est formé.
